# EUROPEAN PATENT APPLICATION

(11) **EP 1 855 114 A1**
(43) Date of publication of application: **14.11.2007**
(21) Application number: 06713829.7
(22) Date of filing: 16.02.2006
(51) Int. Cl.: G01N 35/08, B01D 19/00, B81B 1/00, G01N 37/00

(54) **MICROCHANNEL AND MICROFLUID CHIP**

(30) Priority: 01.03.2005 JP 2005055343; 02.03.2005 JP 2005057376
(71) Applicant: ROHM CO., LTD., Kyoto-shi, Kyoto 615-8585 (JP)
(72) Inventor: SHIMASAKI, Takaaki, , Kyoto-shi Kyoto, 6158585 (JP); MOMOSE, Shun, , Kyoto-shi Kyoto, 6158585 (JP)
(74) Representative: Skuhra, Udo
(86) International application number: PCT/JP2006/302688
(87) International publication number: WO 2006/092959

(57) **Abstract**

It is an object of the present invention to provide a microchannel and a microfluid chip with which a tiny amount of sample can be accurately analyzed without being affected by bubbles contained in the sample. There is provided a microchannel 14 for allowing a liquid to flow, wherein at least a part of the inner surface of the microchannel 14 is provided with a bubble trapping means 15 for trapping any bubbles 16 present in a liquid sample. This allows bubbles present in a sample in a liquid state to be efficiently trapped even though only a tiny amount of sample may be used, regardless of the size of the microchannel. As a result, the flow of a fluid is not disrupted and thus measurement, detection, and so forth can be carried out accurately and quickly without hampering the measurement system.

## Description

### Technical Field

This invention relates to a microchannel and a microfluid chip, and more particularly relates to a microchannel utilized to separate, mix, or detect biological substances, and to a microfluid chip equipped with this microchannel.

### Background Art

Technology called lab-on-a-chip, which is used for the separation, reaction, mixing, measurement, detection, and so forth of DNA (deoxyribonucleic acid), enzymes, proteins, viruses, cells, and other such biological substances on a substrate measuring only a few centimeters in size, which is known by such names as a clinical analysis chip, environmental analysis chip, genetic analysis chip (DNA chip), protein analysis chip (proteome chip), sugar chain chip, chromatograph chip, cellular analysis chip, pharmaceutical screening chip, and so on, has been gaining prominence in recent years in the fields of medicine, foods, pharmaceuticals, and so on.

These chips are provided with channels measuring from a few nanometers to a few millimeters in size, and tiny amounts of fluid (including gases, liquids, microparticles, gelled substances, etc.) are moved, reacted, measured, and so forth within these channels. Such chips are generally called microchips, and the channels on these chips are called microchannels.

Various kinds of measurement, detection, and the like can be carried out easily and in a short time by allowing a tiny amount of a sample, such as a blood sample, to flow into one of these microchips.

However, the sample, reagent, etc., used in a microchip is usually stored at low temperature ahead of time, and then warmed just before being measured with a microchip. As the temperature of the sample rises, there is a decrease in the saturation solubility of oxygen, nitrogen, and other such gas components dissolved in the sample, and any gas components dissolved at over the saturation solubility produce bubbles inside the microchip, such as in the microchannels. As a result, the bubbles can partially or even totally block the microchannels, which impedes the flow of fluid and makes the fluid more difficult to control. Also, when a microchip is used to measure the volume of a sample, the generation of bubbles makes it difficult to measure accurately the volume of the sample. Furthermore, when an optical system is utilized to quantify or qualify a sample, bubbles can lead to the scattering of light and preclude accurate measurement. Also, when electrodes are used to perform quantitative or qualitative analysis of a sample, accurate measurement will be impossible if bubbles are produced on the electrodes.

Usually, in the field of spectroscopic measurement, a pretreatment is performed to remove any dissolved gases from a solution by subjecting the sample to heat stirring, ultrasonic stirring, or the like and thereby suppress the generation of bubbles in an effort to prevent bubbles from being generated from the solution.

When a microchip is used, however, because the sample itself is in such a tiny amount, and because the measurement is preferably carried out easily and quickly, performing such pretreatments is difficult, and the generation of bubbles from the solution cannot be sufficiently prevented.

One method that has been proposed to deal with this problem involves forming a groove with a width of 300 µm and a depth of 100 µm at the bottom of a microchannel (700 µm wide, 500 µm deep) included in a microchip, parallel to the liquid flow direction in the microchannel, gather all the bubbles generated in the sample in this groove, and then move and discharge them with the liquid flow (Techniques and Applications of Microchemical Chips [Maikuro Kagaku Chippu no Gijutsu to Oyo], Maruzen, 2004, pp. 159-161).

### Disclosure of the Invention

However, depending on the size of a microchannel, it may be impossible to form such a groove at the bottom, and the use of grooves is becoming increasingly difficult as sample quantities decrease and microchips become smaller. Another problem is that the flow of a sample can be disrupted by a groove disposed in the central area of a microchannel. Furthermore, since the bubbles collected in the groove are eventually discharged to outside the channel, the groove is formed over the majority of the length in which the microchannel extends, but this means that bubbles collected in the groove can join together and become too large, escape from the groove, and float in the sample. As a result, the bubbles may disrupt the flow of sample and hamper the measurement system, making accurate measurement impossible.

In other words, forming a groove parallel to the flow of liquid through a microchannel inevitably results in the measurement system being hampered by bubbles, so there is a need for a way to be able to achieve the original purpose of a microchip, which is to quickly obtain accurate analysis results with a tiny amount of sample.

In view of this, it is an object of the present invention to provide a microchannel and a microchip with which a tiny amount of sample can be accurately analyzed without being affected by bubbles generated by a gas contained in a sample.

The present invention is a microchannel for allowing a liquid to flow, wherein at least a part of the inner surface of the microchannel is provided with a bubble trapping means for trapping bubbles present in a liquid flow.

Because at least a part of the inner surface of the microchannel is thus provided with a bubble trapping means for trapping any bubbles present in a liquid sample, bubbles produced as the temperature rises in a liquid sample flowing through the microchannel can be reliably trapped on the inner surface of the microchannel. As a result, the flow of a fluid is not disrupted by bubbles, and furthermore impairment of the measurement system can be prevented.

The above-mentioned microchannel can be such that the bubble trapping means comprises a plurality of independent depressions.

This allows the bubble trapping means to be disposed easily and effectively on the microchannel inner surface, and allows bubbles to be trapped more reliably. Disposing these depressions is advantageous for reducing stray light by preventing the unnecessary incidence and scattered reflection of light from outside that enters the microchannel, the scattered reflection of light passing through the microchannel, and so forth.

Also, the bubble trapping means can be formed in the entire inner peripheral surface or in a part of the inner peripheral surface of said microchannel, at a predetermined location in the lengthwise direction of the microchannel.

When the bubble trapping means is formed in the entire inner surface of the microchannel, bubbles can be efficiently trapped over the entire surface of the microchannel that comes into contact with a liquid, regardless of the location where the bubbles are generated in the liquid flow, and bubbles can be reliably prevented from impairing measurement. Also, when said means is formed in a part of the inner surface of the channel, bubbles can be trapped efficiently by the bubble trapping means, and even if bubbles adhere to the inner surface of the channel, they will not impede the progress of the light used for measurement in the optical system, so sample detection and measurement can be performed more accurately.

The microfluid chip of the present invention comprises the above-mentioned microchannel.

With this microfluid chip, various biological substances, such as DNA, enzymes, proteins, viruses, and cells, can be more quickly and accurately measured, detected, etc., in a liquid state in the fields of medicine, foods, pharmaceuticals, and so on, without impairment by bubbles, even when applied to microfluid chips referred to by a variety of names, such as a clinical analysis chip, environmental analysis chip, genetic analysis chip (DNA chip), protein analysis chip (proteome chip), sugar chain chip, chromatograph chip, cellular analysis chip, pharmaceutical screening chip, and so on.

The present invention is also a microchannel for allowing a liquid to flow, wherein at least a part of the inner peripheral surface of the microchannel is provided with a bubble nucleus introduction means for introducing bubble nuclei into a liquid flow from a gas present in a channel.

Because at least a part of the inner surface of the microchannel is thus provided with a bubble nucleus introduction means for introducing bubble nuclei into a liquid flow from a gas present in a channel, bubble nuclei can be easily and reliably introduced in the course of introducing a sample into the microchannel. This means that even if the temperature of a liquid sample flowing through the microchannel rises, and the solubility of a gas in the liquid is reduced, any excess gas will be absorbed by these bubble nuclei, so the generation of bubbles at locations other than at the bubble nucleus introduction means can be prevented. As a result, the flow of a liquid is not disrupted by bubbles, and furthermore impairment of measurement by bubbles can be prevented.

With this microchannel, it is preferable if the bubble nucleus introduction means includes a face that is slanted with respect to the liquid flow direction and/or the bubble nucleus introduction means is constituted by a plurality of independent depressions.

This allows the bubble nucleus introduction means to be disposed simply and effectively in the microchannel inner surface, and allows introduction of bubble nuclei, and suppression of the generation of bubbles at locations other than the bubble nucleus introduction means by an excess of dissolved gas to be achieved more effectively.

The bubble nucleus introduction means may also be formed in the entire inner peripheral surface of said microchannel, or in a part of the inner peripheral surface of said microchannel, at a predetermined location in the lengthwise direction of the microchannel.

When the bubble nucleus introduction means is formed in the entire inner surface of the microchannel, bubble nuclei can be suitably introduced into the liquid flow, so an excess of dissolved gas can be efficiently absorbed and removed by the bubble nuclei over the entire surface of the microchannel that comes into contact with the liquid regardless of the position in the liquid flow. This reliably prevents measurement from being impaired by the generation of bubbles at locations other than the bubble nucleus introduction means. Also, when said means is formed in a part of the inner surface of the channel, an excess of gas dissolved in the liquid will be efficiently absorbed by the appropriately introduced bubble nuclei, and even if bubbles grow along the inner surface of the channel from the bubble nucleus introduction means, they will not impede the progress of the light used for measurement in the optical system, so sample detection and measurement can be performed more accurately.

The microchip of the present invention comprises the above-mentioned microchannel.

With this microchip, various biological substances, such as DNA, enzymes, proteins, viruses, and cells, can be more quickly and accurately measured, detected, etc., in a liquid state in the fields of medicine, foods, pharmaceuticals, and so on, without impairment by bubbles, even when applied to microchips referred to by a variety of names, such as a clinical analysis chip, environmental analysis chip, genetic analysis chip (DNA chip), protein analysis chip (proteome chip), sugar chain chip, chromatograph chip, cellular analysis chip, pharmaceutical screening chip, and so on.

With the present invention, any bubbles present in a sample in a liquid state can be efficiently trapped even though only a tiny amount of sample may be used, regardless of the size of the microchannel. As a result, the flow of a fluid is not disrupted and thus measurement, detection, and so forth can be carried out accurately and quickly without hampering the measurement system.

Also, with the present invention, an excess of gas dissolved in a sample in a liquid state can be efficiently absorbed by bubble nuclei introduced by a bubble nucleus introduction means, and the generation of bubbles at locations other than the bubble nucleus introduction means can be prevented, even though only a tiny amount of sample may be used, regardless of the size of the microchannel. As a result, the flow of a fluid is not disrupted and thus measurement, detection, and so forth can be carried out accurately and quickly without hampering the measurement system.

### Brief Description of Drawings

FIG. 1 consists of a plan view and a cross-sectional view illustrating an embodiment of the microchannel of the present invention;
FIG. 2 is a plan view of a microfluid chip equipped with the microchannel shown in FIG. 1;
FIG. 3 consists of a plan view and a cross-sectional view illustrating another embodiment of the microchannel of the present invention;
FIG. 4 consists of a plan view and a cross-sectional view illustrating yet another embodiment of the microchannel of the present invention;
FIG. 5 is a plan view illustrating yet another embodiment of the microchannel of the present invention;
FIG. 6 consists of a plan view and a cross-sectional view illustrating yet another embodiment of the microchannel of the present invention;
FIG. 7 consists of a plan view and a cross-sectional view illustrating an embodiment of the microchannel of the present invention;
FIG. 8 is a plan view illustrating a microchip equipped with the microchannel shown in FIG. 1;
FIG. 9 consists of a plan view and a cross-sectional view illustrating another embodiment of the microchannel of the present invention;
FIG. 10 is a plan view illustrating yet another embodiment of the microchannel of the present invention;
FIG. 11 consists of a plan view and a cross-sectional view illustrating yet another embodiment of the microchannel of the present invention; and
FIG. 12 is a cross-sectional view describing the conditions for introducing bubble nuclei to the bubble nucleus introduction means with the microchannel of the present invention.

### Best Mode for Carrying Out the Invention

### First Embodiment

### (1) Structure of Microchannel

The microchannel is formed on the inside of a microfluid chip, in the desired two-dimensional and/or three-dimensional shape so as to allow the passage of a sample (a liquid, gas, etc., and preferably a liquid).

There are no particular restrictions on the planar shape of the microchannel, which can be set as desired after taking into consideration the intended application, size, and so forth. The cross sectional shape of the microchannel (a cross section perpendicular to the direction of fluid flow) may be, for example, square, trapezoidal, or another polygonal shape, one of these shapes in which the corners have been rounded, or circular, elliptical, or dome shape, or a non-uniform shape with left and right asymmetry, or any other shape. The purpose of the microchannel is to allow the flow of a tiny amount of sample, preferably a liquid sample, and as long as that purpose is suitably fulfilled, there are no particular restrictions on its size or length. For example, the microchannel can have a cross sectional area of about 0.01 µm² to 100 mm², and a length of about 10 µm to 100 mm. In particular, the smaller is the cross sectional area of the channel, the greater will be the effect on the flow of fluid through the microchannel and of the bubbles generated in the fluid, so the present invention is advantageous for the microchannel having a cross sectional area of about 0.01 to 10 mm². The microchannel may have the same cross sectional shape and size along its entire length, but its shape and size may also vary in places. For instance, the portion where the sample is introduced and/or discharged need not be in a state in which the microchannel is completely blocked off, and part of the upper portion thereof may be open, or with respect to a detection unit that performs measurement by utilizing an optical system, or a portion where volume is measured, etc., the cross section may have any shape so long as its area is kept consistent, or there may be a portion that narrows or widens gradually or in stages.

The inner surface of the microchannel is provided with a bubble trapping means for trapping any bubbles present in a sample in a liquid state that is introduced into the microchannel. The term "bubble trapping means" here refers to a means for trapping fine bubbles generated in a liquid sample in the liquid flow, and maintaining a state in which the trapped bubbles are held without being released into the liquid flow, even though the bubbles are subjected to pressure from the liquid flow. The bubble trapping means may have any configuration as long as this function can be ensured. More specifically, an example is bumps (more precisely, depressions) formed in the microchannel inner surface.

If desired, the inner surface of the microchannel may further comprise a bubble nucleus introduction means for introducing bubble nuclei into a liquid flow from a gas present in a channel, either in addition to a bubble trapping means or in a form that serves both functions. This "bubble nucleus introduction means" refers to a means with which not only are fine bubbles present in the liquid flow trapped from the liquid flow as above mentioned, but part of the gas present in the microchannel is not pushed out by the liquid in the course of this liquid being introduced into the microchannel, and instead stays as bubbles on a part of the inner surface of the microchannel, and as a result allow bubble nuclei to be introduced to the inner surface of the microchannel. In terms of performance of its function by the bubble nucleus introduction means, it is conceivable that the wettability of the material of which it is made with respect to the sample may have a major effect. In the present invention, by employing suitable wettability, part of the gas present in the microchannel can be introduced as bubble nuclei in the course of introducing the liquid into the microchannel. That is, the bubble nucleus introduction means refers to a means by which bubble nuclei can be intentionally introduced ahead of time during the introduction of the liquid.

Generating bubbles from a liquid usually demands a large amount of energy to exceed a certain energy barrier, but if bubbles are already present, these bubbles will readily absorb new bubbles, such a large amount of energy to exceed the energy barrier is not necessary. Also, when a liquid flows through a channel, bubbles tend to be generated at its corners and depressions. Therefore, the bubble nucleus introduction means links together phenomena and functions related to bubbles that superficially seem to be distinct, and this allows bubbles to be removed.

The bubble nucleus introduction means may have any configuration as long as this function can be ensured. More specifically, an example is depressions formed in the microchannel inner surface.

Since this means has not only the function of trapping and holding bubbles, but also the function of introducing bubble nuclei, bubble nuclei can readily grow by absorbing bubbles present in the liquid, so the bubbles in the liquid can be trapped and held more reliably. In particular, even when a liquid has been introduced has little or no flow, fine bubbles try to reduce their surface tension and are thereby attracted to bubble nuclei, which allows the generation of bubbles and the locations where they remain to be controlled more efficiently. Furthermore, when a sample is introduced into a microfluid chip, a deaeration treatment is usually performed, but this treatment can be omitted if a bubble nucleus introduction means such as this is formed, making faster and simpler use possible.

The location where the bubble trapping means is provided, the material of which it is made, and the size (width), depth, density, shape, and so forth of the depressions that make up the bubble trapping means can be suitably selected after taking into account the size and length of the microchannel itself, the material of which it is made, the type, concentration, viscosity, and volume of the sample being used in the microchannel, the location of the microchannel in the microfluid chip, the intended action, and so on, so that the above-mentioned function will be ensured. The same applies to the bubble nucleus introduction means.

The location of the bubble trapping means may be a portion of a predetermined length in the lengthwise direction, or a plurality of these may be used, or the location may extend over the entire length. For example, if the channel is merely used to move a sample, this bubble trapping means may be in a part of the channel of a predetermined length, and may be provided to just a part of the inner periphery thereof, or may be provided around the entire inner periphery surface. More specifically, if the cross sectional shape of the channel is quadrangular, the bubble trapping means is preferably provided on the entire surfaces of the top and bottom faces and of the left and right side faces, and if the channel is circular or dome shaped, the bubble trapping means is preferably disposed over the entire surface including the curved surfaces extending from top to bottom. Also, in a portion of the channel where it is necessary to ensure an optical path for an optical system, or a portion upstream directly linked from this portion, namely, so-called detection unit, and nearby portions thereof of the channel, it is preferable for the bubble trapping means to be disposed over only part of the inner periphery in these portions. More specifically, if the cross sectional shape of the channel is quadrangular, the bubble trapping means is preferably provided over the entire surface of the left and right side faces, only upper portions or portions upward from the middle of these side faces, and if the cross sectional shape is circular or dome shaped, the bubble trapping means is preferably disposed over just the faces located to the side, or just over the upper shoulder portions, or from the middle to the upper shoulder portions, etc., so as to ensure an optical path or the like. The same applies to the bubble nucleus introduction means, but if there are only a few bubble nucleus introduction means, such as when there are from just a few to a few dozen, the bubble trapping means is preferably disposed over just the area near the middle of the side faces of the channel in the detection unit and nearby areas, or over just the area near the tops of the side faces.

The material of the bubble trapping means is usually the same as the material that makes up the microchannel, and can be the same as or different from the material that makes up the microfluid chip. The material will depend on the method by which these components are manufactured, but examples include PET (polyethylene terephthalate), PDMS (polydimethylsiloxane), PMMA (polymethyl methacrylate), PC (polycarbonate), PP (polypropylene), PS (polystyrene), PVC (polyvinyl chloride), polysiloxane, allyl ester resin, cyclo-olefin polymer, silicon rubber, and other such organic compounds, and silicon, silicon oxide films, quartz, glass, ceramic, and other such inorganic compounds. The same applies to the bubble nucleus introduction means.

Also, if the cross sectional area of the microchannel to which the bubble trapping means has been applied is about 0.01 to 10 mm², for example, the width and/or depth of the depressions is 0.1 to 1000 µm, and preferably at least 0.4 µm, at least a few microns, at least a few dozen microns, no more than a few hundred microns, and/or no more than a few dozen microns. In particular, if the width of the depressions is about 0.4 to 50 µm (more preferably, about 0.4 to 30 µm), then bubbles can be reliably trapped without the flow of the sample being disrupted by the bubbles trapped in these depressions, and bubbles can adhere therein without growing too large, regardless of the pressure load exerted by the liquid flow. Furthermore, bubbles can be reliably trapped which could otherwise scatter the light (and particularly visible light) directed at the microchannel, and thereby have an adverse effect on reactions, measurements, etc. From another standpoint, the width and/or depth of the depressions may be about 0.001 to 10%, and preferably about 0.1 to 1%, of the width and/or depth of the microchannel.

The same applies to the size of the bubble nucleus introduction means, but in particular it is favorable for the size thereof to be greater than that of the bubble trapping means, such as from 1 to 1000 µm, and especially about 30 to 300 µm, or about 40 to 300 µm. Setting the size in this way allows bubble nuclei to be reliably introduced, taking into account the wettability of the sample with respect to the material of the bubble nucleus introduction means, and also allows gas in a sample to be trapped by the bubble nuclei, and bubbles to be held in the bubble nucleus introduction means.

The density of the depressions, taking into account the total amount of gas estimated to be contained in the total volume of sample introduced into the microchannel, is preferably set such that the total volume of the depressions is at least about 3 × 10⁻⁶ to 3 × 10⁻³ cm³. More specifically, if the size (cross sectional area × depth) of one depression is about 0.16 µm² × 0.4 µm to 2500 µm² × 50 µm, then the density may be about 2000 to 1 × 10⁷ depressions per square millimeter. In particular, if the depressions of the bubble nucleus introduction means are of a large size as above, the density (number) of the depressions may be at least 2, at least 4, no more than 50, and/or no more than 30, and may, for example, be about 6, about 10, or about 20.

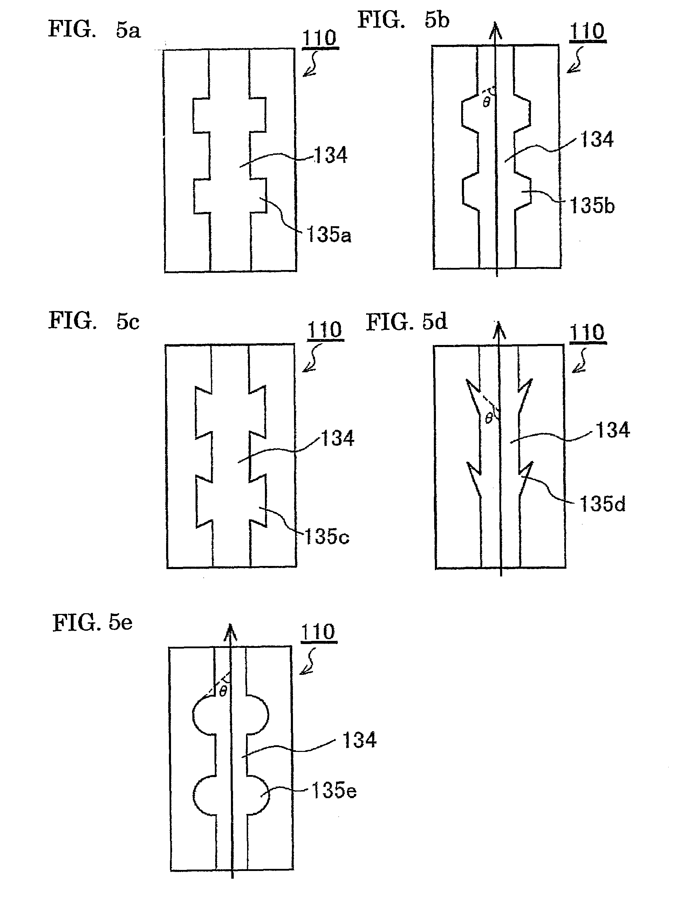

There are no particular restrictions on the shape of the depressions, but it may be hemispherical; hemielliptical; cuboid, cubic, or other quadrangular columnar shape, circular columnar shape, or polygonal columnar shape; dome shape; circular conical, triangular pyramidal, quadrangular pyramidal, or other such conical shape; a frustum of a cone; a non-uniform shape with no left-right symmetry; a shape having a taper in the width direction, height direction, and/or depth direction; a combination of these shapes; or any other shape. It is preferable, however, for independent depressions to be formed predominantly (see FIGS. 5a to 5e, for example). That is, some of the depressions may be formed so that they are linked, but the majority of the depressions are preferably formed individually and independently. If too many of the depressions are linked together, trapped bubbles will come into contact with each other and tend to grow into large bubbles, and such bubbles will tend to be re-released into the fluid.

In particular, when the bubble nucleus introduction means is used, it preferably includes a face that is slanted with respect to the liquid flow direction (indicated by the arrow in FIG. 5). The slant angle here (see θ in FIG. 5b, etc.) can be suitably adjusted according to the properties of the material that makes up the microchannel, the depth, width, density, and shape of the depressions themselves, the type, concentration, viscosity, and wettability of the sample being used in the microchannel, and so forth. An example is a range of from about a few degrees to 160°. From another standpoint, the bubble nucleus introduction means preferably includes two faces that constitute an acute angle in cross section (or rounded faces corresponding thereto). This allows bubble nuclei to be reliably introduced regardless of the viscosity and so forth of the sample being used. If the slanted face of the bubble nucleus introduction means is a curved face, etc., a face that includes a tangent to this curved face may be slanted at a predetermined angle.

The depressions may have the same width and/or depth, density, shape, and so on over the entire microchannel, but may instead vary in different portions of the microchannel, and may be non-uniform.

### (2) Method for Manufacturing Microchannel

The microchannel can be easily manufactured by utilizing a method known in this field. For instance, a metal mold having a shape corresponding to the desired microfluid chip, microchannel, and bubble trapping means is readied. This mold can be formed by mechanical working, and in particular, the portion of the mold that forms the bubble trapping means, within the region where the microchannel is to be formed, is preferably treated by fine mechanical working, blasting, polishing, or the like to produce a shape corresponding to the bubble trapping means. Next, PET is molded in this mold to obtain a substrate onto which the bubble trapping means and a pattern corresponding to the microchannel have been transferred. Finally, two of these substrates are put together with the patterned sides facing each other, thereby forming a microfluid chip equipped with a microchannel in which a bubble trapping means has been formed at the desired location. Instead, only one substrate having a pattern corresponding to the microchannel may be used, and the other substrate may be flat.

Also, injection molding, imprinting, or another such method may be utilized instead of molding with a metal mold.

Furthermore, a substrate onto which a pattern corresponding to the microchannel has been transferred may be obtained by directly subjecting one or both flat substrates to photolithography, mechanical working, or the like.

Also, depressions may be formed on a substrate having a pattern corresponding to the microchannel by performing blasting, polishing, glow discharge, or another such physical method directly on the portion where the bubble trapping means is to be formed, or the depressions may be formed by etching with an alkali fused salt or fluorine-based chemical, coating with a film, or the like.

### (3) Structure of Microfluid Chip Equipped with Microchannel

A microfluid chip is mainly constituted, for example, by first and second substrates, one or both having a pattern of any of various shapes formed by depressions, which are stuck together with an adhesive agent or the like.

Such microfluid chips are used in the fields of medicine, foods, pharmaceuticals, and so on as substrates for the analysis, detection, reaction, measurement, and so forth of a variety of biological substances (mainly in a liquid state) such as DNA, enzymes, proteins, viruses, and cells, and this microfluid chip encompasses all chips referred to by a variety of names such as a clinical analysis chip, environmental analysis chip, genetic analysis chip (DNA chip), protein analysis chip (proteome chip), sugar chain chip, chromatograph chip, cellular analysis chip, pharmaceutical screening chip, and so on.

This microfluid chip is equipped with a microchannel having any of the various two-dimensional and/or three-dimensional straight, bent, or curved patterns discussed above, according to the intended application. A sample introduction port, discharge port, and/or reservoir, etc., are formed at the end of this microchannel or at some point along its length, and a centrifugal separation unit, weighing unit, optical or electrical measurement unit, reaction unit, mixing unit, branching unit, and so forth are formed as themselves or as a microchannel that links these, in a series of structures.

### Embodiment 1

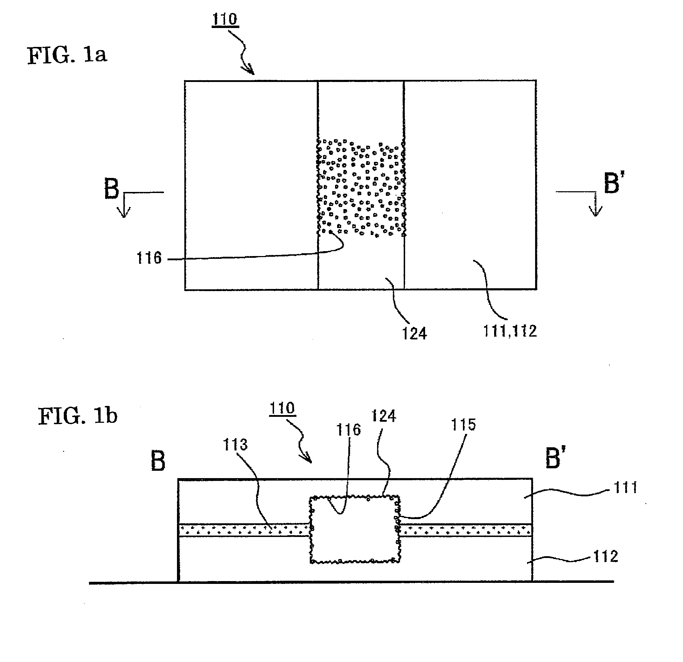

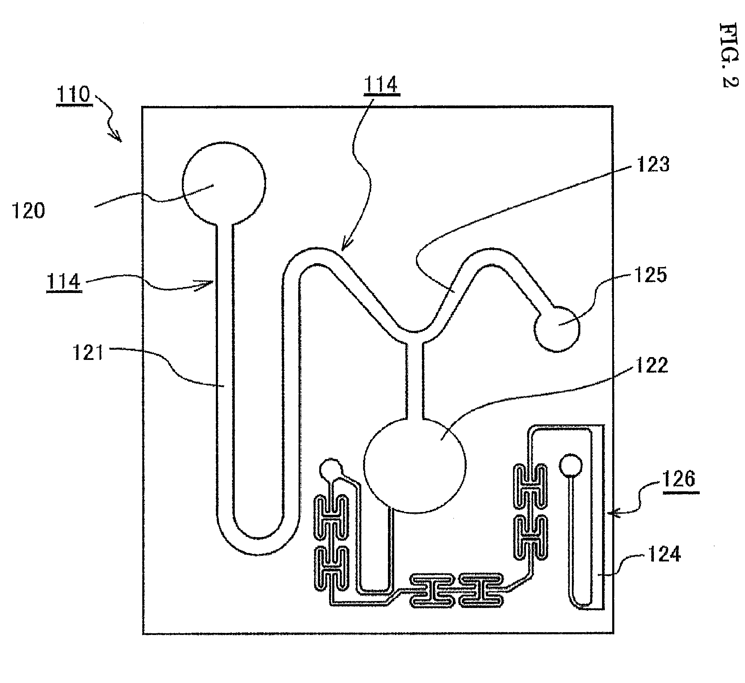

As shown in FIGS. 1a and 1b and FIG. 2, a microchannel and microfluid chip of the present invention are formed by substrates 111 and 112 composed of PET and having a thickness of 1 mm with patterns corresponding to microchannels 114 and 124 formed on the surface thereof. These substrates 111 and 112 can be formed by molding in a metal mold. When the substrates 111 and 112 having patterns of the microchannels 114 and 124 in this manner are for example, stuck together via an adhesive 113 with the patterns facing each other, a microfluid chip 110 on the inside of which the microchannels 114 and 124 are formed is obtained.

With this microfluid chip 110, for example, first the sample is introduced through a sample introduction port 120. The introduced sample is moved through a centrifugal separation unit 121 to a reservoir 122 by centrifugal force or the like obtained by rotating the microfluid chip 110. The sample goes from the reservoir 122 through the microchannel 114, and reaches a measurement unit 126 of an optical system. Here, for example, irradiation with light is performed, and the number of cells is counted, or the absorbancy is measured. Meanwhile, part of the sample is directly moved from the centrifugal separation unit 121 through the microchannel 124 to a weighing unit 123, where the volume is measured, and then goes through the microchannel 114 to a discharge port 125.

As shown in FIG. 1, the microchannel 124 that has a quadrangular cross sectional shape with a depth of 100 µm and a width of 100 µm at its narrowest point. Fine depressions with a width and depth of about 1 µm are formed locally as a bubble trapping means 115 in a density of 8 × 10⁵ depressions per square millimeter on the upper and lower faces and both side faces of the inner surface of the microchannel 124.

A sample and a reagent that had been stored at 4°C were injected through the introduction port 120 into this microfluid chip. The entire microfluid chip was heated to 40°C to promote the reaction between reagent and sample.

The gas component corresponding to the amount of change in the saturation solubility in response to temperature change vaporized and produced bubbles here, but nearly all bubbles 116 were trapped by the bubble trapping means 115 while passing through the microchannel 124, and adhered to the inner surface of the microchannel 124, and were thereby removed from the flowing sample. That is, the fine bubbles 116 with a high surface tension were trapped in the depressions (the bubble trapping means 115) of the microchannel 124 so that their surface tension decreased, and these trapped bubbles 116 became seed bubbles that absorbed other fine bubbles 116 present in the sample, and became bubbles of a certain size and with a somewhat low surface tension, so as to correspond to the shape of the depressions, and consequently were stably held by the bubble trapping means 115.

As a result, the flow of sample was not disrupted, the sample could be moved smoothly, and no bubbles were admixed into the sample measured at the weighing unit 123, for example, so the precise volume could be measured.

### Embodiment 2

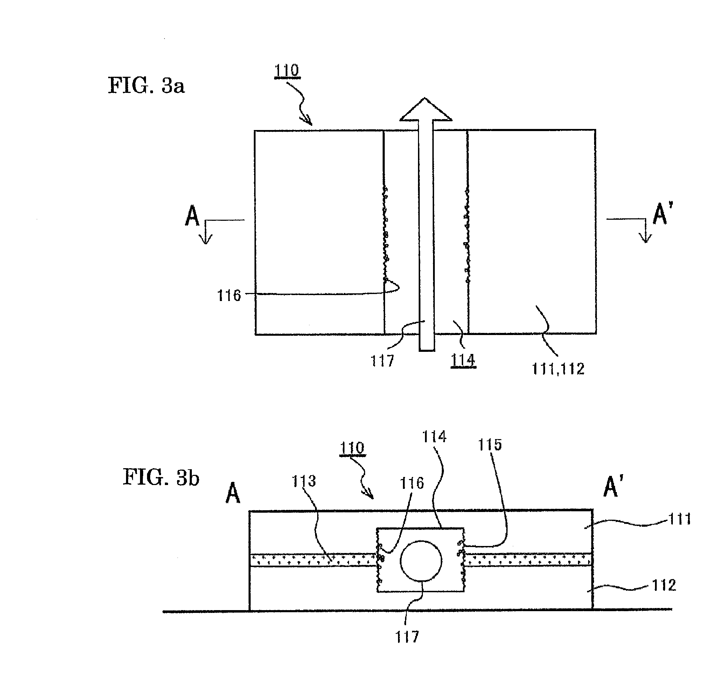

As shown in FIGS. 3a and 3b, the microchannel in this embodiment was set to a width of 300 µm, a depth of 100 µm, and a length of 10 mm so that when light was transmitted through the microchannel 114 at a location corresponding to the measurement unit of the microfluid chip shown in FIG. 2, the component concentrations in the sample could be detected from the transmissivity.

Fine depressions with a width and depth of about 0.5 µm were locally formed in a density of 9 × 10⁶ depressions per square millimeter on both side faces on the inside of the microchannel 114.

A sample and a reagent that had been stored at 4°C were injected through the introduction port 120 into this microfluid chip, and the entire microfluid chip was heated to 40°C to promote the reaction between reagent and sample.

The gas component corresponding to the amount of change in the saturation solubility in response to temperature change vaporized and produced bubbles here, but nearly all the bubbles 116 were trapped by the bubble trapping means 115 while passing through the microchannel 114, and adhered to the inner surface of the microchannel 114, and were thereby removed from the flowing sample. That is, the fine bubbles 116 with a high surface tension were trapped in the depressions (the bubble trapping means 115) of the microchannel 114 so that their surface tension decreased, and these trapped bubbles 116 became seed bubbles that absorbed other fine bubbles 116 present in the sample, and became bubbles of a certain size and with a somewhat low surface tension, so as to correspond to the shape of the depressions, and consequently were stably held by the bubble trapping means 115.

As a result, when this microchannel 114 was irradiated with light having a width of 100 µm from the outside, and the component concentrations in the sample were detected from the transmissivity, scattered reflection of light caused by bubbles 116 entering an optical path 117 could be effectively prevented, which allowed more accurate detection.

### Embodiment 3

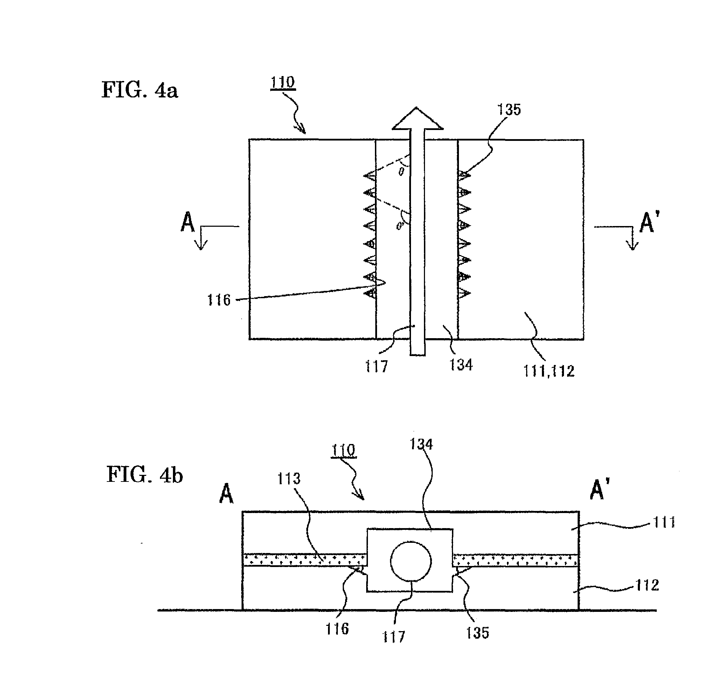

As shown in FIGS. 4a and 4b, the microchannel in this embodiment was set to a width of 1 mm, a depth of 1 mm, and a length of 10 mm so that when light was transmitted through the microchannel 134 at a location corresponding to the measurement unit of the microfluid chip shown in FIG. 2, the component concentrations in the sample could be detected from the transmissivity.

Eight fine, triangular pyramidal depressions measuring about 700 µm wide, 300 µm high, and 700 µm deep were formed on each side, at intervals of 1.1 mm, as a bubble nucleus introduction means 135, at the uppermost part of both side faces on the inside of the microchannel 134. One face constituting this bubble nucleus introduction means 135 had a slanted face of θ = approximately 60° and θ' = about 120° with respect to the direction of sample flow.

A sample and a reagent that had been stored at 4°C were injected through the introduction port 120 into this microfluid chip, and the entire microfluid chip was heated to 37°C to promote the reaction between reagent and sample and the sample was moved. It was confirmed that while the sample was passing through the bubble nucleus introduction means 135 portion, gas present in the microchannel 134 remained at the bubble nucleus introduction means 135, bubble nuclei were introduced into the corners of the bubble nucleus introduction means 135, and that as the sample continued to pass through, the bubbles present in the sample were attracted to the bubble nuclei and linked together, and these bubbles reliably held in the depressions comprising the bubble nucleus introduction means 135.

As a result, when this microchannel 134 was irradiated with light having a width of 100 µm from the outside, and the component concentrations in the sample were detected from the transmissivity, scattered reflection of light caused by bubbles 116 entering the optical path 117 could be effectively prevented, which allowed more accurate detection.

### Embodiments 4 to 8

As shown in plan views of FIGS. 5a to 5e, the microchannels in these embodiments were formed in the same manner as in Embodiment 3, except that the shapes of the bubble nucleus introduction means 135a to 135e formed in the microchannel 134 were changed.

The same effect was obtained with these microfluid chips as in Embodiment 3.

### Embodiment 9

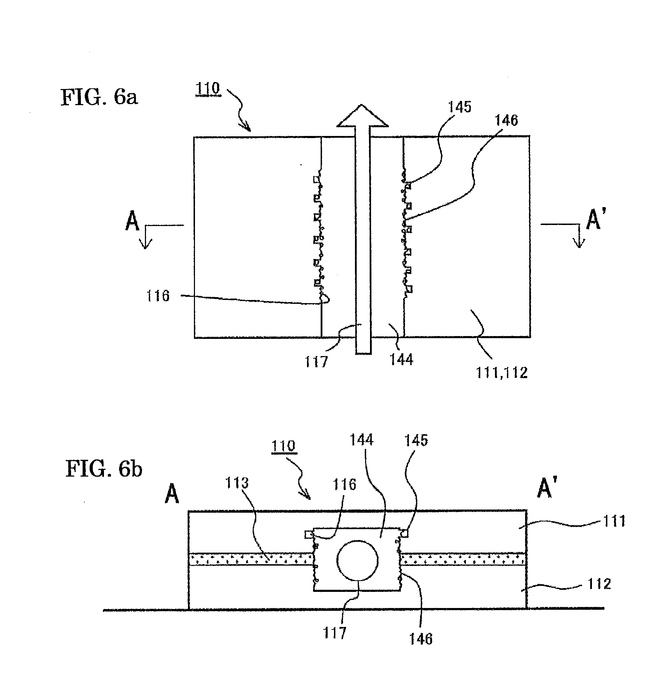

As shown in FIGS. 6a and 6b, the microchannel in this embodiment was set to a width of 1 mm, a depth of 1 mm, and a length of 10 mm so that when light was transmitted through a microchannel 144 at a location corresponding to the measurement unit of the microfluid chip shown in FIG. 2, the component concentrations in the sample could be detected from the transmissivity.

Six fine, cuboid depressions measuring 700 µm wide, 300 µm high, and 700 µm deep were formed on each side as a bubble nucleus introduction means 145 at intervals of 1.4 mm, at the upper part on both side faces on the inside of the microchannel 144. Depressions smaller than the bubble nucleus introduction means 145 were formed as a bubble trapping means 146, at a density of about 7 × 10⁷ depressions per square millimeter, on both side faces on the inside of the microchannel 144.

This microfluid chip was evaluated in the same manner as in Embodiment 2, which confirmed that as the sample continuously passed through, any bubbles present in the sample were attracted to the bubble nuclei and linked together, and that bubbles reliably held in the depressions constituting the bubble nucleus introduction means 145 and adhered to the bubble trapping means 146.

### Second Embodiment

### (1) Structure of Microchannel

The microchannel is formed on the inside of a microchip, in the desired two-dimensional and/or three-dimensional shape so as to allow the passage of a sample (a liquid, gas, etc., and preferably a liquid).

There are no particular restrictions on the planar shape of the microchannel, which can be set as desired after taking into consideration the intended application, size, and so forth. The cross sectional shape of the microchannel (a cross section perpendicular to the direction of fluid flow) may be, for example, square, trapezoidal, or another polygonal shape, one of these shapes in which the corners have been rounded, or circular, elliptical, or dome shaped, or a non-uniform shape with left and right asymmetry, or any other shape. The purpose of the microchannel is to allow the flow of a tiny amount of sample, preferably a liquid sample, and as long as that purpose is suitably fulfilled, there are no particular restrictions on its size or length. For example, the microchannel can have a cross sectional area of about 0.0001 to 1 mm², and a length of about 10 to 100 mm. In particular, the smaller is the cross sectional area of the channel, the greater will be the effect on the flow of fluid through the microchannel and of the bubbles generated in the fluid, so the present invention is advantageous for the microchannel having a cross sectional area of about 0.0001 to 0.25 mm². The microchannel may have the same cross sectional shape and size along its entire length, but its shape and size may also vary in places. For instance, the portion where the sample is introduced and/or discharged need not be in a state in which the microchannel is completely blocked off, and part of the upper portion thereof may be open, or with respect to a detection unit that performs measurement by utilizing an optical system, or a portion where volume is measured, etc., the cross section may have any shape so long as its area is kept consistent, or there may be a portion that narrows or widens gradually or in stages.

The inner surface of the microchannel is provided with a bubble nucleus introduction means for introducing bubble nuclei into a liquid flow from gas present in the channel. The term "bubble nucleus introduction means" here refers to a means with which part of the gas present in the microchannel is not pushed out by the liquid in the course of this liquid being introduced into the microchannel, and instead stays as bubbles on a part of the inner surface of the microchannel, and as a result allows bubble nuclei to be introduced to the inner surface of the microchannel. In terms of performance of its function by the bubble nucleus introduction means, it is conceivable that the wettability of the material of which it is made with respect to the sample may have a major effect. In the present invention, by employing suitable wettability, part of the gas present in the microchannel can be introduced as bubble nuclei in the course of introducing the liquid into the microchannel. That is, the bubble nucleus introduction means refers to a means by which bubble nuclei can be intentionally introduced ahead of time during the introduction of the liquid. This bubble nucleus introduction means functions not only to introduce bubble nuclei, but also to cause any gas that has been dissolved in excess in the liquid flow to be efficiently absorbed by bubble nuclei that have been introduced to the bubble nucleus introduction means, and to hold this absorbed gas along with the bubble nuclei.

Generating bubbles from a liquid usually demands a large amount of energy to exceed a certain energy barrier, but if bubbles that are already present absorb surrounding gas dissolved in the liquid and expand in size, no energy is necessary. Also, when a liquid flows through a channel, bubbles tend to be generated at its corners and depressions. Therefore, the bubble nucleus introduction means links together phenomena and functions related to bubbles that superficially seem to be distinct, and this allows bubbles to be removed.

The bubble nucleus introduction means may have any configuration as long as this function can be ensured. More specifically, an example is depressions formed in the microchannel inner surface.

Thus, since this means has not only a function of introducing bubble nuclei, but also a function of absorbing and holding dissolved gas, introduced bubble nuclei grow in size by absorbing any gas that is dissolved in excess in the liquid so as to reduce the gas dissolved in the liquid, which makes it possible to prevent bubbles from being generated except at the bubble nucleus introduction means. In particular, even when a liquid that has been introduced has little or no flow, gas dissolved in the liquid is attracted to the area around the bubble nuclei where concentration of dissolved gas has been decreased as a result of the bubble nuclei absorbing the gas dissolved in the liquid, due to concentration diffusion, which allows the generation of bubbles and the locations where they remain to be controlled more efficiently. Furthermore, when a sample is introduced into a microchip, a deaeration treatment is usually performed, but this treatment can be omitted if a bubble nucleus introduction means such as this is formed, making faster and simpler use possible.

The location where the bubble nucleus introduction means is provided, the material of which it is made, and the size (width), depth, density, shape, and so forth of the depressions that make up the bubble nucleus introduction means can be suitably selected after taking into account the size and length of the microchannel itself, the material of which it is made, the type, concentration, viscosity, and volume of the sample being used in the microchannel, the location of the microchannel in the microchip, the intended action, and so on, so that the above-mentioned function will be ensured.

The location of the bubble nucleus introduction means may be a portion of a predetermined length in the lengthwise direction, or a plurality of these may be used, or the location may extend over the entire length. For example, if the channel is merely used to move a sample, this bubble nucleus introduction means may be in a part of the channel of a predetermined length, and may be provided to just a part of the inner periphery thereof, or may be provided around the entire inner periphery surface. More specifically, if the cross sectional shape of the channel is quadrangular, the bubble nucleus introduction means is preferably provided on the entire surface of the top and bottom faces and of the left and right side faces, and if the channel is circular or dome shape, the bubble nucleus introduction means is preferably disposed over the entire surface including the curved surfaces extending from top to bottom. Also, in a portion of the channel where it is necessary to ensure an optical path for an optical system, or a directly linked portion upstream from this portion, namely so-called detection unit, and nearby portions thereof of the channel, it is preferable for the bubble nucleus introduction means to be disposed over only part of the inner periphery in these portions. More specifically, if the cross sectional shape of the channel is quadrangular, the bubble nucleus introduction means is preferably provided over the entire surface of the left and right side faces, only upper portions or portions upward from the middle of these side faces, and if the cross sectional shape is circular or dome shaped, the bubble nucleus introduction means is preferably disposed over just the faces located to the side, or just over the upper shoulder portions, or from the middle to the upper shoulder portions, etc., so as to ensure an optical path or the like.

The material of the bubble nucleus introduction means is usually the same as the material that make up the microchannel, and can be the same as or different from the material that makes up the microchip. Although it will depend on the method for manufacturing these, examples include PET (polyethylene terephthalate), PDMS (polydimethylsiloxane), PMMA (polymethyl methacrylate), PC (polycarbonate), PP (polypropylene), PS (polystyrene), PVC (polyvinyl chloride), polysiloxane, allyl ester resin, cyclo-olefin polymer, silicon rubber, and other such organic compounds, and silicon, silicon oxide films, quartz, glass, ceramic, and other such inorganic compounds.

Also, if the cross sectional area of the microchannel to which the bubble nucleus introduction means has been applied is about 0.01 to 10 mm², for example, the width and/or depth of the depressions is 0.1 to 1000 µm, and preferably at least a few dozen microns, at least 50 µm, at least 100 µm, no more than a few dozen microns, and/or no more than a few hundred microns. It is particularly favorable for the width of the depressions to be 1 to 1000 µm, and especially about 30 to 500 µm. Thus setting the size of the depressions allows bubble nuclei to be reliably introduced by taking into account the wettability of the sample with respect to the material of the bubble nucleus introduction means, gas in the sample can be trapped by the bubble nuclei, and bubbles can be held in the bubble nucleus introduction means. Furthermore, if the depth of the depressions is about 30 to 500 µm (and even more preferably about 50 to 300 µm), then the flow of sample will not be disrupted by the trapped bubbles, and the trapped bubbles can be made to adhere regardless of the pressure load exerted by the liquid flow. Furthermore, trapped bubbles will not scatter light directed at the microchannel and have an adverse effect on measurements, etc.

Also, density (number) of the depressions can be decided upon by taking into account the total amount of gas included in the liquid to be introduced into the microchannel and the volume of the bubble nuclei formed during liquid introduction. The bubble nuclei generated in the depressions during liquid introduction account for 5 to 90% of the internal volume of the depressions. Also, the amount of gas generated when the liquid is heated from 0°C to 40°C is about 1.7% (volumetric ratio) of the amount of liquid. Therefore, for the depressions to hold all of the gas that has become excess during heating of the liquid, the total volume of the depressions is preferably set to be about 1.8 to 17% of the liquid volume. More specifically, the total volume of the depressions is preferably set to be about 0.088 to 0.83 mm³ with respect to a channel with a volume of 4.9 mm³ (700 µm wide, 700 µm high, and 10,000 µm long). If the size (cross sectional area × depth) of a single depression is about 100 µm² × 100 µm, the density (number) of the depressions is required to be about 9 to 90, and if the size (cross sectional area × depth) of a single depression is about 500 µm² × 400 µm, the density (number) is required to be about 1 to 5; for example, the number may be about 4, or about 6, or about 10, or about 20.

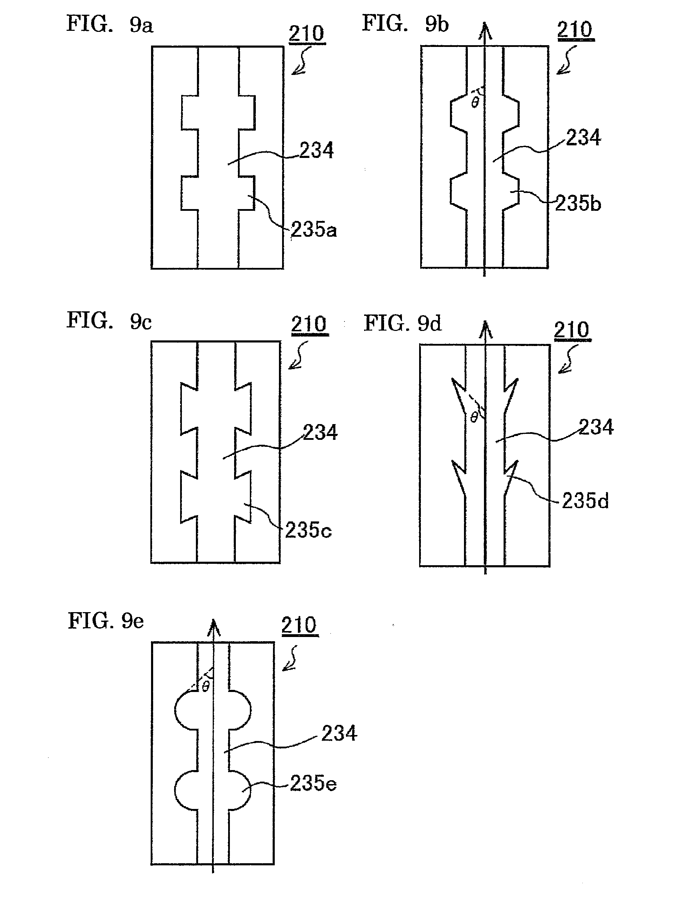

There are no particular restrictions on the shape of the depressions, but it may be hemispherical; hemielliptical; cuboid, cubic, or other quadrangular columnar shape, circular columnar shape, or polygonal columnar shape; dome shaped; circular conical, triangular pyramidal, quadrangular pyramidal, or other such conical shape; a frustum of a cone; a non-uniform shape with no left-right symmetry; a shape having a taper in the width direction, height direction, and/or depth direction; a combination of these shapes; or any other shape. It is preferable, however, for independent depressions to be formed predominantly (see FIGS. 9a to 9e, for example). That is, some of the depressions may be formed so that they are linked, but the majority of the depressions are preferably formed individually and independently. If too many of the depressions are linked together, trapped bubbles will come into contact with each other and tend to grow into large bubbles, and such bubbles will tend to be re-released into the fluid.

In particular, the bubble nucleus introduction means preferably includes a face that is slanted with respect to the liquid flow direction (indicated by the arrow in FIG. 9). The slant angle here (see θ in FIG. 9b, etc.) can be suitably adjusted according to the properties of the material that makes up the microchannel, the depth, width, density, and shape of the depressions themselves, the type, concentration, viscosity, and wettability of the sample being used in the microchannel, and so forth. An example is a range of from about a few degrees to 160°, and the angle is preferably over 90°. From another standpoint, the bubble nucleus introduction means preferably includes two faces that constitute an acute angle in cross section (or rounded faces corresponding thereto). This allows bubble nuclei to be reliably introduced regardless of the viscosity and so forth of the sample being used. If the slanted face of the bubble nucleus introduction means is a curved face, etc., a face that includes a tangent to this curved face may be slanted at a predetermined angle.

The depressions may have the same width and/or depth, density, shape, and so on over the entire microchannel, but may instead vary in different portions of the microchannel, and may be non-uniform.

### (2) Method for Manufacturing Microchannel

The microchannel can be easily manufactured by utilizing a method known in this field. For instance, a metal mold having a shape corresponding to the desired microchip, microchannel, and bubble nucleus introduction means is readied. This mold can be formed by mechanical working, and in particular, the portion of the mold that forms the bubble nucleus introduction means, within the region where the microchannel is to be formed, is preferably treated by fine mechanical working, blasting, polishing, or the like to produce a shape corresponding to the bubble nucleus introduction means. Next, PET is molded in this mold to obtain a substrate onto which the bubble nucleus introduction means and a pattern corresponding to the microchannel have been transferred. Finally, two of these substrates are stuck together with the patterned sides facing each other, thereby forming a microchip equipped with a microchannel in which a bubble nucleus introduction means has been formed at the desired location. Instead, only one substrate having a pattern corresponding to the microchannel may be used, and the other substrate may be flat.

Also, injection molding, imprinting, or another such method may be utilized instead of molding with a metal mold.

Furthermore, a substrate onto which a pattern corresponding to the microchannel has been transferred may be obtained by directly subjecting one or both flat substrates to photolithography, mechanical working, or the like.

Also, depressions may be formed on a substrate having a pattern corresponding to the microchannel by performing blasting, polishing, glow discharge, or another such physical method directly on the portion where the bubble nucleus introduction means is to be formed, or the depressions may be formed by etching with an alkali fused salt or fluorine-based chemical, coating with a film, or the like.

### (3) Structure of Microchip Equipped with Microchannel

A microchip is mainly constituted, for example, by first and second substrates, one or both having a pattern of any of various shapes formed by depressions, which are stuck together with heat or an adhesive agent or the like.

Such microchips are used in the fields of medicine, foods, pharmaceuticals, and so on as substrates for the analysis, detection, reaction, measurement, and so forth of a variety of biological substances (mainly in a liquid state) such as DNA, enzymes, proteins, viruses, and cells, and this microchip encompasses all chips referred to by a variety of names such as a clinical analysis chip, environmental analysis chip, genetic analysis chip (DNA chip), protein analysis chip (proteome chip), sugar chain chip, chromatograph chip, cellular analysis chip, pharmaceutical screening chip, and so on.

This microchip is equipped with a microchannel having any of the various two-dimensional and/or three-dimensional straight, bent, or curved patterns discussed above, according to the intended application. A sample introduction port, discharge port, and/or reservoir, etc., are formed at the end of this microchannel or at some point along its length, and a centrifugal separation unit, metering unit, mixture reaction unit optical or electrical measurement unit, and so forth are formed as themselves or as a microchannel that links these, in a series of structures.

### Embodiment 10

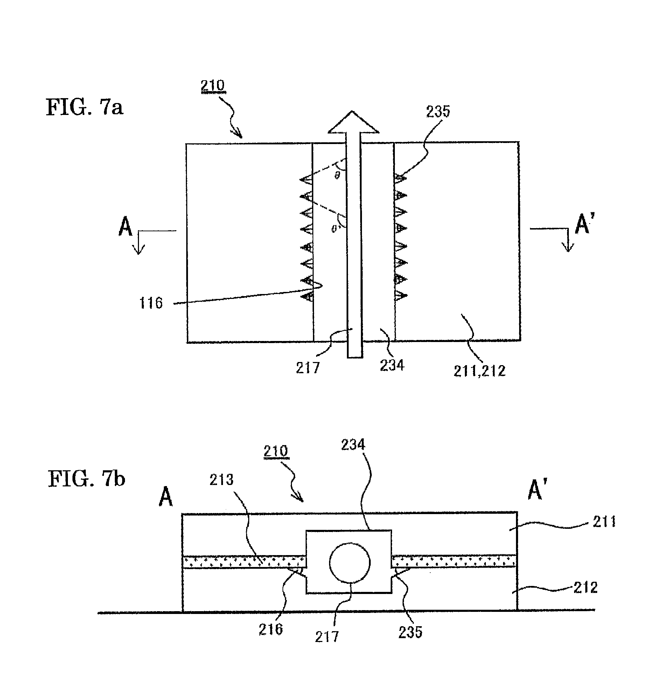

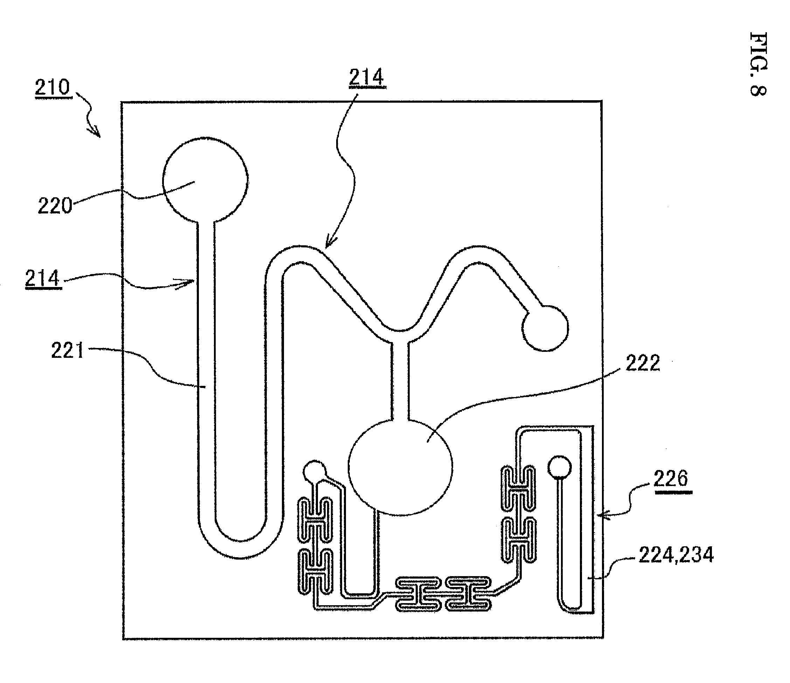

As shown in FIGS. 7a and 7b and FIG. 8, a microchannel and microchip of the present invention are formed by substrates 211 and 212 composed of PET and having a thickness of 1 mm with patterns corresponding to microchannels 214 and 234 formed on the surface thereof. These substrates 211 and 212 can be formed by molding in a metal mold. When the substrates 211 and 212 having patterns of the microchannels 214 and 234 in this manner are for example stuck together via an adhesive 213 with the patterns facing each other, a microchip 210 on the inside of which the microchannels 214 and 234 are formed is obtained.

With this microchip 210, for example, first the sample is introduced through a sample introduction port 220. The introduced sample is moved through a centrifugal separation unit 221 to a reservoir 222 by centrifugal force or the like obtained by rotating the microchip 210. The sample goes from the reservoir 222 through the microchannel 214, and reaches a measurement unit 226 of an optical system. Here, for example, irradiation with light is performed, and the number of cells is counted, or the absorbancy is measured.

As shown in FIGS. 7a and 7b, the microchannel 234 is set to a width of 700 µm, a depth of 700 µm, and a length of 10 mm so that it will transmit light to the microchannel 234 at a location corresponding to its measurement unit, and the component concentrations in the sample can be detected from this transmissivity.

Eight fine, triangular pyramidal depressions measuring about 700 µm wide, 300 µm high, and 700 µm deep were formed on each side, at intervals of 1000 µm, as a bubble nucleus introduction means 235, at the uppermost part of both side faces on the inside of the microchannel 234. One face constituting this bubble nucleus introduction means 235 had a slanted face of θ = approximately 60° and θ' = about 120° with respect to the direction of sample flow.

A sample and a reagent that had been stored at 4°C were injected through the introduction port 220 into this microchip, and the entire microchip was heated to 37°C to promote the reaction between reagent and sample and the sample was moved. It was confirmed that while the sample was passing through the area of the bubble nucleus introduction means 235, gas present in the microchannel 234 remained at the bubble nucleus introduction means 235, and bubble nuclei were introduced into the corners of the bubble nucleus introduction means 235, and that the gas that had become excess due to a reduction in solubility caused by heating was absorbed by the introduced bubble nuclei, and no bubbles were generated except by the bubble nucleus introduction means 235. It was also confirmed that the bubble nuclei that grew in the bubble nucleus introduction means 235 reliably stayed in these depressions.

As a result, when this microchannel 234 was irradiated with light having a width of 300 µm from the outside, and the component concentrations in the sample were detected from the transmissivity, the bubbles were all generated inside the bubble nucleus introduction means 235, and no bubbles were generated in the portion through which the detection light 217 passed, so there was no scattered reflection of light caused by bubbles, which allowed more accurate detection.

### Embodiments 11 to 15

As shown in the plan views of FIGS. 9a to 9e, based on the microchip shown in FIG. 8, the microchannels in these embodiments were formed in the same manner as in Embodiment 10, except that the shapes of the bubble nucleus introduction means 235a to 235e formed in the microchannel 234 were changed.

The same effect was obtained with these microchips as in

### Embodiment 10.

### Embodiment 16

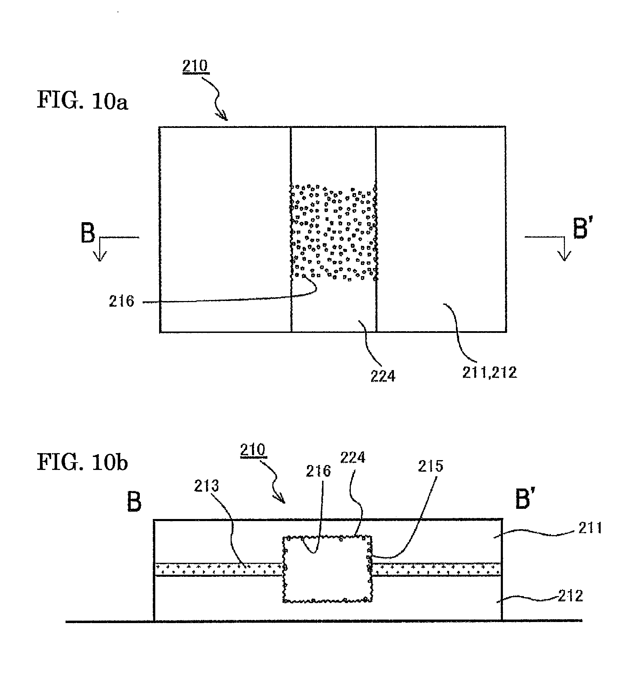

As shown in FIGS. 10a and 10b, based on the microchip of FIG. 8, the microchannel in this embodiment had a quadrangular cross sectional shape with a width of 100 µm and a depth of 100 µm at the narrowest place. Fine depressions with a width and depth of about 1 µm were formed as the bubble nucleus introduction means 215 on both side faces and the upper and lower faces of the inner surface of this microchannel 224, and were formed locally at a density of 10,000 depressions per square millimeter.

A sample and a reagent that had been stored at 4°C were injected through the introduction port 220 into this microchip, and the entire microchip was heated to 40°C to promote the reaction between reagent and sample.

The gas component corresponding to the amount of change in the saturation solubility in response to temperature change was eluted and produced bubbles here, but when the liquid flowed into the microchannel 224, the gas present in the microchannel 224 was kept inside the depressions by the liquid and by the bubble nucleus introduction means 215, and became bubble nuclei. These introduced bubble nuclei absorbed gas that was dissolved in excess in the liquid, and while they grew they reduced the gas that was dissolved in excess in the liquid, preventing bubbles from being generated except by the bubble nucleus introduction means. As a result, bubbles were generated only at the bubble nucleus introduction means, and the generated bubbles were held stably in the bubble nucleus introduction means. The gas dissolved in the liquid was moved to the area around the bubble nuclei where concentration of dissolved gas has been decreased as a result of the bubble nuclei absorbing the gas dissolved in the liquid due to concentration diffusion, which allowed the generation of bubbles and the locations where they remained to be controlled more efficiently.

As a result, the flow of sample was not disrupted, the sample could be moved smoothly, and no bubbles were admixed into the sample measured at the metering unit 223, for example, so the precise volume could be measured.

### Embodiment 17

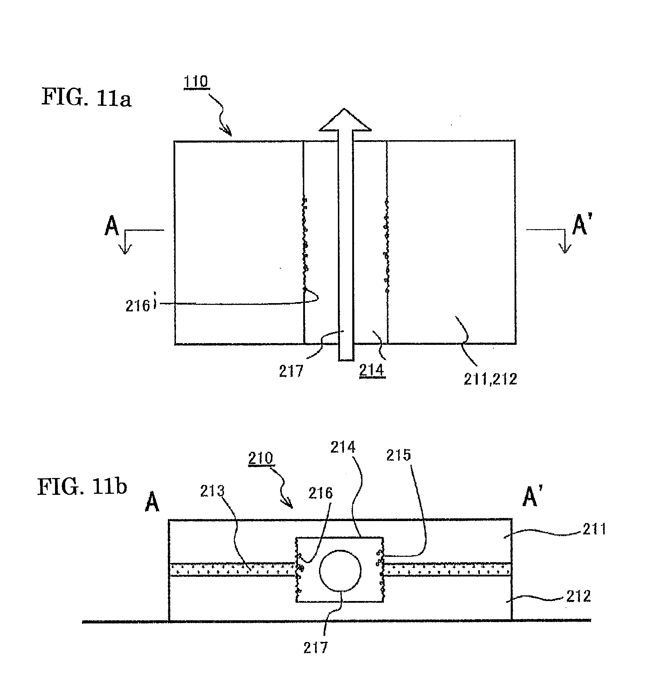

As shown in FIGS. 11a and 11b, the microchannel in this embodiment was set to a width of 300 µm, a depth of 100 µm, and a length of 10 mm so that when light was transmitted through the microchannel 214 at a location corresponding to the measurement unit of the microchip shown in FIG. 8, the component concentrations in the sample could be detected from the transmissivity.

Fine depressions with a width and depth of about 1 µm were locally formed as the bubble nucleus introduction means 215 in a density of 60,000 depressions per square millimeter on both side faces on the inside of the microchannel 214.

A sample and a reagent that had been stored at 4°C were injected through the introduction port 220 into this microchip, and the entire microchip was heated to 40°C to promote the reaction between reagent and sample.

The gas component corresponding to the amount of change in the saturation solubility in response to temperature change vaporized and produced bubbles here, but when the liquid flowed into the microchannel 224, the gas present in the microchannel 224 was kept inside the depressions by the liquid and by the bubble nucleus introduction means 215, and became bubble nuclei. These introduced bubble nuclei absorbed gas that was dissolved in excess in the liquid, and while they grew they reduced the gas that was dissolved in excess in the liquid, preventing bubbles from being generated except by the bubble nucleus introduction means, so bubbles were generated only at the bubble nucleus introduction means, and the generated bubbles were held stably in the bubble nucleus introduction means. The gas dissolved in the liquid was moved to the area around the bubble nuclei where concentration of dissolved gas has been decreased as a result of the bubble nuclei absorbing the gas dissolved in the liquid due to concentration diffusion, and, which allowed the generation of bubbles and the locations where they remained to be controlled more efficiently.

As a result, when this microchannel 214 was irradiated with light having a width of 50 µm from the outside, and the component concentrations in the sample were detected from the transmissivity, scattered reflection of light caused by bubbles 216 entering the optical path 217 could be effectively prevented, which allowed more accurate detection.

### Embodiment 18

The microchannel in this embodiment was set to a width of 300 µm, a depth of 100 µm, and a length of 10 mm so that when light was transmitted through the microchannel at a location corresponding to the measurement unit of the microchip shown in FIG. 8, the component concentrations in the sample could be detected from the transmissivity.

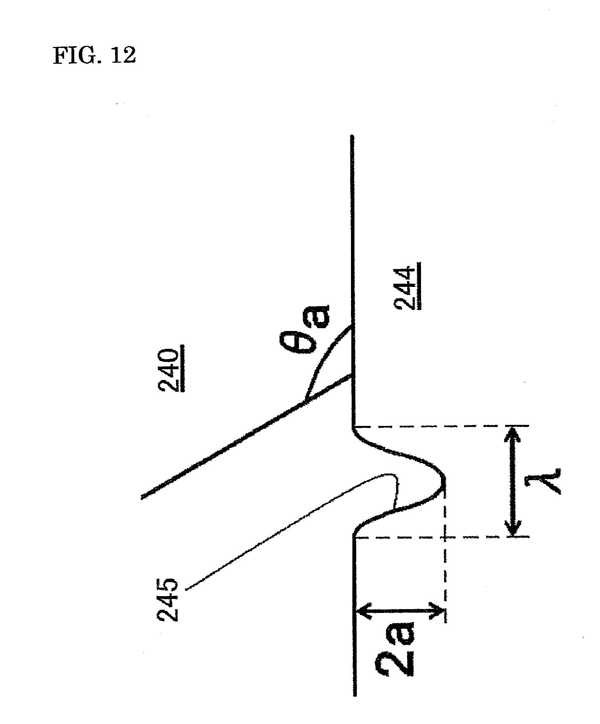

Bubble nucleus introduction means were locally formed in a density of 2000 depressions per square millimeter on both side faces on the inside of the microchannel. FIG. 12 shows one of these bubble nucleus introduction means. This bubble nucleus introduction means 245 had a curved surface approximated by a sine wave of width λ and depth 2a on the side faces of a microchannel 244 formed from PET. An introduced liquid sample 40 comprised a mixture of a reagent and plasma, and was introduced at a contact angle θₐ of approximately 100° with respect to the microchannel 244.

In this case, the conditions under which the bubble nuclei were introduced were expressed by a > λ · (absolute value of tanθₐ)/2π (see Physics of Surface Tension [Hyomen Choryoku no Butsurigaku], Yoshioka Shoten, 2003, pp. 221-222), and the relationship between the width and depth of the bubble nucleus introduction means was expressed by a > 0.91λ.

Therefore, when the width of the bubble nucleus introduction means was set to 1 µm, 10 µm, 100 µm, and 1000 µm, the depth was set to be greater than 1.82 µm, greater than 18.2 µm, greater than 182 µm, and greater than 1820 µm, respectively, which allowed the bubble nuclei to be reliably introduced into the bubble nucleus introduction means.

As a result, when the temperature of the liquid sample was raised to about 40°C, light with a width of 50 µm was brought in to the microchannel from the outside, and the component concentrations of the sample were detected from the transmissivity, as discussed above, scattered reflection of light caused by bubbles entering the optical path could be effectively prevented, and more accurate detection was possible.

### Industrial Applicability

When thermoplastic resin substrates are stuck together by use of the present invention, destruction or deformation of the substrates by heat can be prevented. Thus, the present invention can be applied to bio-chips and micro chemical chips in which channels, reagent reservoirs, or the like are formed in the interior of a substrate to measure chemical substances and biological substances such as DNA, enzymes, proteins, antigens, backdown, viruses, cells, and so forth.

Also, the present invention can be utilized in a variety of substrates that can be applied to gases and liquids and called by such names as a clinical analysis chip, environmental analysis chip, genetic analysis chip (DNA chip), protein analysis chip (proteome chip), sugar chain chip, chromatograph chip, cellular analysis chip, pharmaceutical screening chip, and so on, and which are used in the fields of medicine, foods, pharmaceuticals, and so on.

## Claims

1. A microchannel for allowing a liquid to flow, wherein at least a part of the inner surface of the microchannel is provided with a bubble trapping means for trapping bubbles present in a liquid flow.

2. The microchannel according to Claim 1, wherein the bubble trapping means comprises a plurality of independent depressions.

3. The microchannel according to Claim 1, wherein the bubble trapping means is formed in the entire inner peripheral surface of said microchannel, at a predetermined location in the lengthwise direction of the microchannel.

4. The microchannel according to Claim 1, wherein the bubble trapping means is formed in a part of the inner peripheral surface of said microchannel, at a predetermined location in the lengthwise direction of the microchannel.

5. A microchip, comprising the microchannel according to Claim 1.

6. A microchannel for allowing a liquid to flow, wherein at least a part of the inner surface of the microchannel is provided with a bubble nucleus introduction means for introducing bubble nuclei into a liquid flow from a gas present in a channel.

7. The microchannel according to Claim 6, wherein the bubble nucleus introduction means includes a face that is slanted with respect to the liquid flow direction.

8. The microchannel according to Claim 6, wherein the bubble nucleus introduction means is constituted by a plurality of independent depressions.

9. The microchannel according to Claim 6, wherein the bubble nucleus introduction means is formed in the entire peripheral inner surface of said microchannel, at a predetermined location in the lengthwise direction of the microchannel.

10. The microchannel according to Claim 6, wherein the bubble nucleus introduction means is formed in a part of the inner peripheral surface of said microchannel, at a predetermined location in the lengthwise direction of the microchannel.

11. A microchip, comprising the microchannel according to Claim 6.
